# EUROPEAN PATENT APPLICATION

(11) **EP 4 647 999 A1**
(43) Date of publication of application: **12.11.2025**
(21) Application number: 24174273.3
(22) Date of filing: 06.05.2024
(51) Int. Cl.: G06Q 30/0601, G06Q 10/087, G06T 19/00, G06V 20/20

(54) **VIRTUAL OBJECTS GENERATION OF PRODUCTS OFFERED FOR SALE IN A REAL SPACE STORE ENVIRONMENT AND GUIDING A CUSTOMER TO A PRODUCT OFFERED FOR SALE**

(71) Applicant: Auki Matterless Limited, Hong Kong (HK)
(72) Inventor: PIHL, Nils, Hong Kong (HK); SHAW, Phil, Hong Kong (HK); PONG, Ku Chun, Hong Kong (HK)
(74) Representative: Zacco Sweden AB

(57) **Abstract**

The present invention relates to a method for generating virtual objects of products offered for sale in a real space store environment. The products being exposed on a structure within the real space store environment. The method comprising scanning, one by one, a plurality of data-encoded markers on the structure in the real space store environment, using a scanner of a scanning mobile electronic device. The scanning mobile electronic device being calibrated in a virtual representation of the real space store environment such that the scanning mobile electronic device has a known pose in the virtual representation of the real space store environment. Each of the plurality of data-encoded markers is associated with a product. In connection with each scanning the following are performed: determining, at a moment of scanning, an associated pose of the scanning mobile electronic device in the virtual representation of the real space store environment, generating an associated virtual object of the product associated with the scanned data-encoded marker, and determining an associated position of the associated virtual object within the virtual representation of the real space store environment as an intersection between the structure in the virtual representation of the real space store environment and a raycast from the associated pose of the scanning mobile electronic device in the virtual representation of the real space store environment and in a direction of the scanner. The associated virtual object of the product comprises textual information related to the product.

## Description

### Technical field

The present invention relates to generation of virtual objects of products offered for sale in a real space store environment. The products being exposed on a structure within the real space store environment. Generation of virtual objects of structure exposing the products is also presented. Further, methods for guiding a customer/user to a product/structure within the real space store environment using the virtual objects of the products/structures are presented.

### Background

Arranging products in a store is a crucial aspect of retail management, and it involves the strategic placement of products to optimize sales, enhance the shopping experience, and streamline operations. This process is influenced by various factors, including consumer behavior, marketing strategies, and logistical considerations. Some key aspects of the problem of arranging products in a store are:
Consumer Behavior. Understanding how customers navigate through a store and how they make purchase decisions is essential. For example, placing essential or frequently purchased items in high-traffic areas can increase their visibility and sales.

Category Management. Products are often organized into categories to simplify the shopping experience for customers. This may involve grouping related items together, such as placing all breakfast cereals in one aisle. The layout should make it easy for customers to find what they are looking for, promoting convenience and efficiency.

Visual Merchandising. The visual appeal of product displays is crucial. Well-designed and attractive displays can capture the attention of shoppers, encouraging them to explore and purchase. Seasonal displays and thematic arrangements can create a sense of excitement and encourage sales during specific times of the year.

Inventory Management. Efficient store layouts help in managing inventory effectively. Placing products strategically based on their popularity and demand can reduce stockouts and overstock situations. Backroom organization and accessibility are also critical for restocking shelves quickly.

Promotional Strategies. Retailers often use end caps, promotional displays, and special sections to highlight featured products or promotions. These areas can be strategically placed to maximize visibility and encourage sales.

Space Utilization. Optimizing the use of available space is vital. Retailers must balance the desire for a wide product assortment with the need for clear aisles and an uncluttered shopping environment. Efficient use of space also contributes to a positive customer experience, reducing frustration and enhancing the overall shopping journey.

Cultural Considerations. Cultural factors may influence how products are arranged. For example, in some cultures, certain products may be grouped together due to dietary preferences or cultural traditions.

In summary, arranging products in a store is a multifaceted challenge that requires a deep understanding of consumer behavior, effective category management, visual merchandising skills, and consideration of various logistical and promotional factors. Successful retailers continuously analyze and adjust their store layouts to meet the evolving needs and preferences of their customers. Historically, RFID tags and smart shelving have been used to monitor product levels and automate reordering processes. Hence, there is a need for new technology to help retailers in the adjusting and/or keeping track of their store layouts.

Further, finding a specific product or a shelf in the store exposing a type of products may be challenging for a customer. Hence, there is a need for new technology to help guiding a customer to products offered for sale in a store.

### Summary of the invention

In view of the above, it is an object of the present invention to provide retailers with new technology for adjusting and/or keeping track of store layouts. This new technology being easy to implement without the need of costly hardware installations. Further, in view of the above, it is an object of the present invention to provide a method for guiding a customer to products offered for sale in a store.

According to a first aspect a method for generating virtual objects of products offered for sale in a real space store environment is provided. The products being exposed on a structure within the real space store environment. The method comprises scanning, one by one, a plurality of data-encoded markers on the structure in the real space store environment, using a scanner of a scanning mobile electronic device. The scanning mobile electronic device being calibrated in a virtual representation of the real space store environment such that the scanning mobile electronic device has a known pose in the virtual representation of the real space store environment. Each of the plurality of data-encoded markers is associated with a product. In connection with each scanning, determining, at a moment of scanning, an associated pose of the scanning mobile electronic device in the virtual representation of the real space store environment. In connection with each scanning, generating an associated virtual object of the product associated with the scanned data-encoded marker, wherein the associated virtual object of the product comprises textual information related to the product. In connection with each scanning, determining an associated position of the associated virtual object within the virtual representation of the real space store environment as an intersection between the structure in the virtual representation of the real space store environment and a raycast from the associated pose of the scanning mobile electronic device in the virtual representation of the real space store environment and in a direction of the scanner.

The method may further comprise, in connection with each scanning, extracting a unique identifier from the data-encoded marker. Wherein generating an associated virtual object of the product associated with the scanned data-encoded marker comprises extracting the textual information related to the product by, based on the extracted unique identifier from the data-encoded marker, looking-up the textual information related to the product in a database comprising entries of unique identifiers and thereto linked textual information related to a respective product.

The method may further comprise displaying one or more of the virtual objects of the products at a display of a displaying mobile electronic device as one or more AR-objects within the virtual representation of the real space store environment, wherein each such one or more AR-object being located at the associated position of the virtual object, wherein the displaying mobile electronic device being calibrated in the virtual representation of the real space store environment such that the displaying mobile electronic device has a known pose in the virtual representation of the real space.

The method may further comprise: prompting a user of the displaying mobile electronic device for a specific product to be found; searching the textual information of the virtual objects of the products offered for sale in the real space store environment for a match with the specific product to be found; and guiding the user of the displaying mobile electronic device to the associated position of the matched virtual object. The guiding may comprise displaying guiding AR-objects on the display of the displaying mobile electronic device.

The method may further comprise generating a virtual object of the structure by: scanning, using the scanner of the scanning mobile electronic device, a data-encoded marker located in connection with the structure in the real space store environment; prompting a user of the scanning mobile electronic device to input a textual description of a type of products the structure comprises; and generating the virtual object of the structure to comprise the inputted textual description of the structure. Wherein the virtual object of the structure may be generated as a planogram intersecting the associated positions of the associated virtual objects of the products being exposed on the structure.

The method may comprise repeating the generating of virtual objects of products offered for sale in the real space store environment for a plurality of structures within the real space store environment. The method may comprise repeating the generating of virtual objects of the plurality of structures.

The method may further comprise displaying one or more of the virtual objects of the plurality of structures at a display of a displaying mobile electronic device as one or more AR-objects within the virtual representation of the real space store environment. The displaying mobile electronic device being calibrated in the virtual representation of the real space store environment such that the displaying mobile electronic device has a known pose in the virtual representation of the real space.

The method may further comprise: prompting a user of the displaying mobile electronic device for a type of product to be found; searching the textual information of the virtual objects of the structures for a match with the type of product to be found; and guiding the user of the displaying mobile electronic device to the associated position of the matched virtual object. The guiding may comprise displaying guiding AR-objects on the display of the displaying mobile electronic device.

The method may further comprise displaying the virtual objects of products offered for sale in the real space store environment and/or the virtual objects of the structures of the real space store environment in a virtual reality, VR, representation of the real space store environment on a screen of an electronic device. This may allow a store manager to get a virtual reality view of the store and help her in adjusting and/or keeping track of store layouts.

The method may further comprise calibrating the scanning mobile electronic device such that a current pose of the scanning mobile electronic device is known in the virtual representation of the real space store environment.

According to a second aspect a method of guiding a user in a real space store environment comprising products being exposed on structures within the real space store environment is provided. The method comprising: calibrating a displaying mobile electronic device associated with the user such that a current pose of the displaying mobile electronic device is known in a virtual representation of the real space store environment; connecting the displaying mobile electronic device to a virtual space layer comprising a plurality of virtual objects of products offered for sale in the real space store environment, wherein each virtual object of a product comprises textual information related to the product represented by the virtual object of the product and a position in the virtual representation of the real space store environment at which the product is located; prompting the user of the displaying mobile electronic device for a specific product to be found within the real space store environment; searching the textual information of the virtual objects of the products in the virtual space layer for a match with the specific product to be found; guiding the user of the displaying mobile electronic device to the associated position of the matched virtual object by displaying guiding AR-objects on a display of the displaying mobile electronic device.

The above-mentioned features of the method according to the first aspect, when applicable, apply to this second aspect as well. In order to avoid undue repetition, reference is made to the above.

According to a third aspect a method of guiding a user in a real space store environment comprising products being exposed on structures within the real space store environment is provided. The method comprising: calibrating a displaying mobile electronic device associated with the user such that a current pose of the displaying mobile electronic device is known in a virtual representation of the real space store environment; connecting the displaying mobile electronic device to a virtual space layer comprising a plurality of virtual objects of structures exposing products offered for sale in the real space store environment, wherein each virtual object of a structure comprises textual information related to the structure represented by the virtual object of the structure and a position in the virtual representation of the real space store environment at which the structure is located; prompting the user of the displaying mobile electronic device for a type of product to be found within the real space store environment; searching the textual information of the virtual objects of the structures in the virtual space layer for a match with the type of product to be found; guiding the user of the displaying mobile electronic device to the associated position of the matched virtual object of the structure by displaying guiding AR-objects on a display of the displaying mobile electronic device.

The above-mentioned features of the method according to the first aspect, when applicable, apply to this third aspect as well. In order to avoid undue repetition, reference is made to the above.

According to a forth aspect a non-transitory computer-readable storage medium having stored thereon instructions for implementing any one of the methods according to the first, second or third aspects, when executed on a device having processing capabilities is presented.

The above-mentioned features of the method according to the first, second and third aspect, when applicable, apply to this fourth aspect as well. In order to avoid undue repetition, reference is made to the above.

A further scope of applicability will become apparent from the detailed description given below. However, it should be understood that the detailed description and specific examples are given by way of illustration only.

It is to be understood that the terminology used herein is for purpose of describing particular embodiments only, and is not intended to be limiting. It must be noted that, as used in the specification and the appended claim, the articles "a," "an," "the," and "said" are intended to mean that there are one or more of the elements unless the context clearly dictates otherwise. Thus, for example, reference to "a unit" or "the unit" may include several devices, and the like. Furthermore, the words "comprising", "including", "containing" and similar wordings does not exclude other elements or steps.

### Brief description of the drawings

The above and other aspects will now be described in more detail, with reference to appended figures. The figures should not be considered limiting; instead they are used for explaining and understanding.

As illustrated in the figures, the sizes of layers and regions may be exaggerated for illustrative purposes and, thus, are provided to illustrate the general structures. Like reference numerals refer to like elements throughout.
Fig. 1 illustrates a schematic top view of a real space in the form of a store environment.
Fig. 2 illustrates a virtual representation of the store environment in Fig. 1.
Fig. 3 illustrates a system of devices used to perform the method discussed in connection with Fig. 4.
Fig. 4 is a block diagram of a method for generating virtual objects of products offered for sale in the store of Fig. 1.
Figs 5 and 7 are a block diagram of alternative methods for guiding a customer in the real space store environment of Fig. 1 for seeking a product to be purchased.
Fig. 6 is a continuation of block diagram of the method for generating virtual objects of products offered for sale started in Fig. 4.

### Detailed description

The present invention will now be described more fully hereinafter with reference to the accompanying drawings, in which currently preferred embodiments of the invention are shown. This invention may, however, be embodied in many different forms.

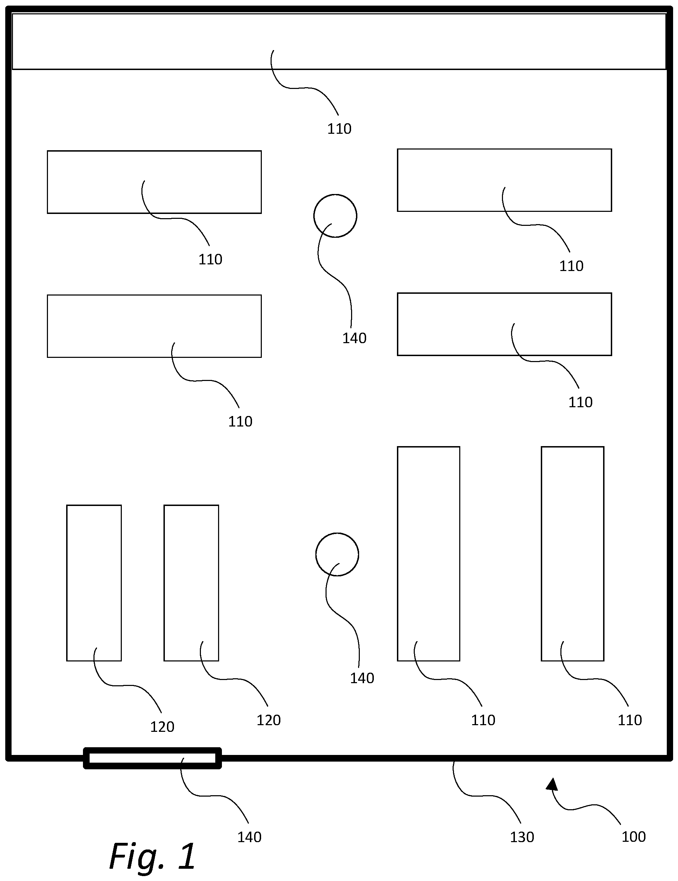

Fig. 1 illustrates a schematic top view of a real space in the form of a store environment 100. In the store environment 100 there is a number of structures 110 for exposing products offered for sale in the store 100. Non-liming examples of structures 110 for exposing products are gondola shelving, end cap displays, produce bins and tables for fresh fruits and vegetables, refrigerated display cases, stacked pallets, specialty displays, bulk bins, hanging displays, and floor stacking. Gondola shelving is one of the most common types of shelving in grocery stores. Gondola shelves are freestanding units that can be double-sided or single-sided, allowing for flexibility in aisle layout. They are adjustable and versatile for displaying a wide range of products. End cap displays are shelves at the end of aisles. These spaces are often used for promotional displays, featuring new products, or showcasing items on sale. End cap displays attract attention and encourage impulse purchases. Produce bins and tables for fresh fruits and vegetables allow customers to easily view and select items. This creates a market-like atmosphere and enhances the visibility of the produce. Refrigerated display cases are used to display perishable items such as dairy products, meat, and deli items. These cases can be open or enclosed and are designed to maintain the freshness of temperature-sensitive products. Stacked Pallets of goods, especially non-perishable items or promotional products, may be stacked in strategic locations throughout the store. This technique is common for bulk or seasonal items. Specialty displays may be created for certain products, such as seasonal items, ethnic foods, or specialty ingredients. These displays are often themed and designed to attract customers interested in specific categories. Aisle shelving units along the aisles are used to organize a variety of products. Bulk bins are commonly used for items like grains, nuts, and candies. Customers can use scoops to select the desired quantity, and this approach is often more cost-effective for both the store and the customer. Hanging displays, such as clip strips or hanging racks, are often used for small or impulse-buy items like snacks, candies, or travel-sized products. Floor stacking may be used to stack certain products directly on the floor to create eye-catching displays. This is often done with promotional or bulk items. These structures are often used in combination to create an engaging and organized shopping environment. The goal is to optimize product visibility, accessibility, and appeal to enhance the overall shopping experience for customers.

In connection with the structures 110 for exposing goods in the store environment 100 each such structure 110 comprises a plurality of shelf edge labels. These are labels placed on the edge of structure, typically below the product. Each label typically contains the product name, price, and sometimes additional information like weight or unit price. Each label also comprises a data-encoded marker. The shelf edge labels may be printed labels. Alternatively, the shelf edge labels may be small digital displays, typically having a display based on e-ink.

Further, in connection with the structures 110 for exposing goods in the store environment 100 there may be arranged a specific data-encoded marker associated with the whole structure 110. Such a specific data-encoded marker associated with the whole structure 110 may e.g. be located at the floor just in front of the structure 110 and/or on a top portion of the structure 110.

In addition to structures 110 for exposing goods in the store environment 100 may comprise other structures, such as check-out counters 120, walls 130, doors 140, and/or supporting pillars 150.

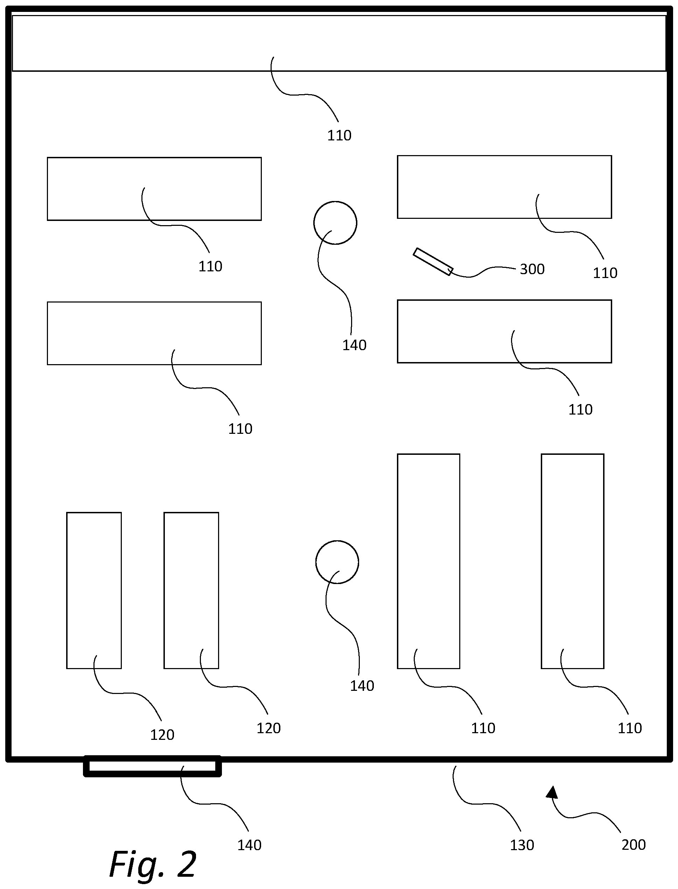

In Fig. 2 a virtual representation 200 of the store 100, i.e. a virtual representation 200 of a real space store environment is illustrated. The different structures 110, 120, 130, 140, 150 of the store environment 100 are included in the virtual representation 200. The virtual representation 200 may be a 2D or 3D representation of the real space. Typically, the virtual representation 200 is a 3D representation. In order to simplify of the drawings, in the in Fig. 2 illustrated example, the virtual representation 200 is a 2D representation of the real space store environment 100. Within the virtual representation 200 of the store environment 100 a virtual representation of a scanning mobile electronic device 300 is also illustrated. The scanning mobile electronic device 300 may, e.g., be a mobile phone, a robot, a body worn camera, smart glasses, augmented reality, AR, glasses, or any other suitable mobile electronic device having the possibility to scan data-encoded markers within the store environment 100. The data-encoded markers may be one or more of an ArUco marker, a QR Code, and a barcode. Each data-encoded marker typically comprises a unique identifier. Typically, there exists a database comprising entries of unique identifiers and thereto linked textual information related to a respective product. Such textual information may be a name of the product and/or a description of the product. The entries in the database may of course also comprise other type of information, such as a prize of the product.

The scanning mobile electronic device 300 is calibrated in the virtual representation 200 of the real space store environment 100 such that a current pose of the scanning mobile electronic device 300 in the virtual representation 200 of the real space store environment 100 is known. In this context a current pose has the meaning of a current position and orientation of the scanning mobile electronic device 300 within the virtual representation 200 of the real space store environment 100.

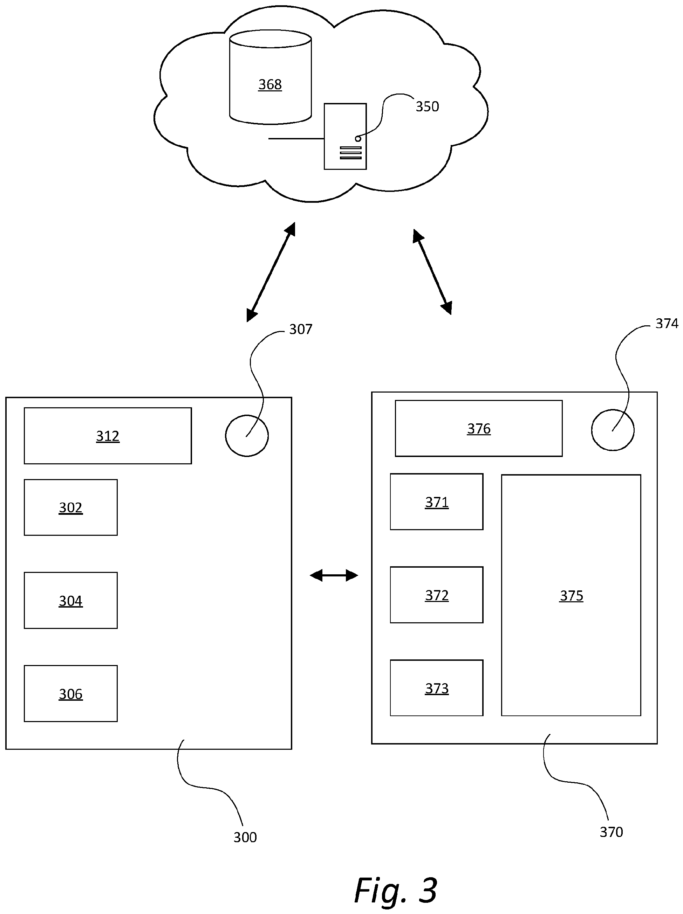

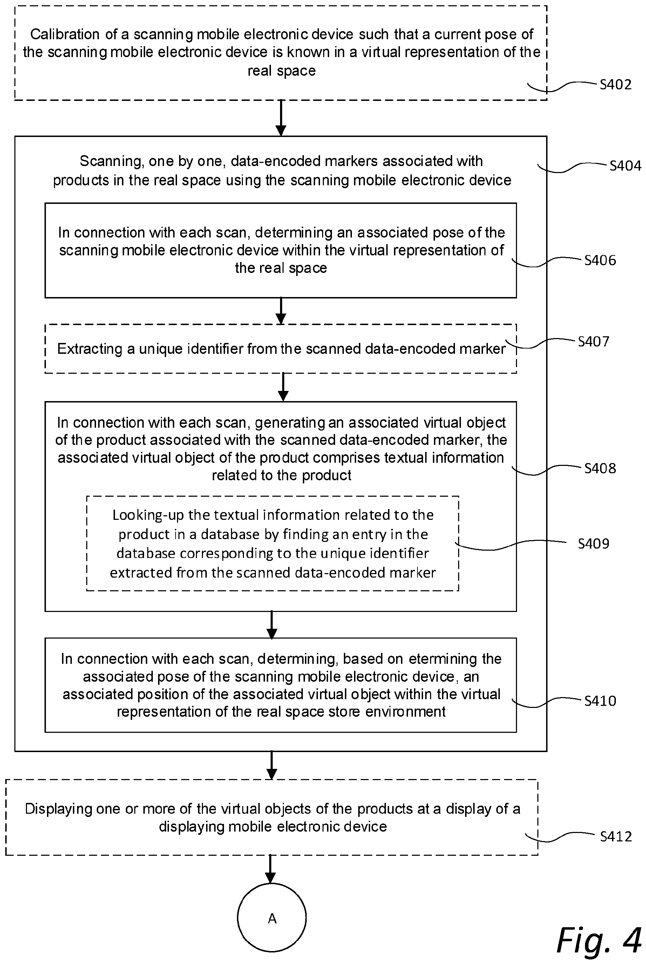

The scanning mobile electronic device 300 is schematically illustrated in Fig. 3 together with other devices used for implementing a method, according to the present invention, for generating virtual objects of products offered for sale in the real space store environment 100. The method will be further discussed below in connection with Fig. 4. The scanning mobile electronic device 300 may be associated with a user, e.g. a store manager or a store clerk, being responsible for the real space store environment 100. The store manager or the store clerk may be making rounds in the store environment 100 carrying the scanning mobile electronic device 300.

The scanning mobile electronic device 300 is configured to scan data-encoded markers in the real space store environment 100. The scanner 307 may be a built-in camera or a dedicated scanner. Intrinsics, especially intrinsics of the scanner 307, of the scanning mobile electronic device 300 are known.

Further, the scanning mobile electronic device 300 is configured to, upon scanning a data-encoded marker, associate its current pose, i.e. orientation and position, in the virtual representation 200 of the real space store environment 100 with the scan. This may be implemented by that the scanning mobile electronic device 300 is monitoring its movement using one or more built-in sensors such as an accelerometer 302, a gyroscope 304 and/or a magnetometer 306. The accelerometer 302 is configured to provide information about the movement of the scanning mobile electronic device 300, including changes in speed and direction. Acceleration data is typically represented in three axes: X, Y, and Z, corresponding to the 3D space in which the scanning mobile electronic device 300 is moving. The gyroscope 304 is configured to measure orientation and rotational movements of the scanning mobile electronic device 300. The gyroscope provides information about tilt and rotation rates around the X, Y, and Z axes. The magnetometer is configured to determine orientation of the scanning mobile electronic device 300 relative to the Earth's magnetic field. The magnetometer helps in providing a sense of direction of the scanning mobile electronic device 300. By combining data from the accelerometer, the gyroscope and/ or the magnetometer (and possibly also other sensors), the scanning mobile electronic device 300 can accurately track its movement in the real space.

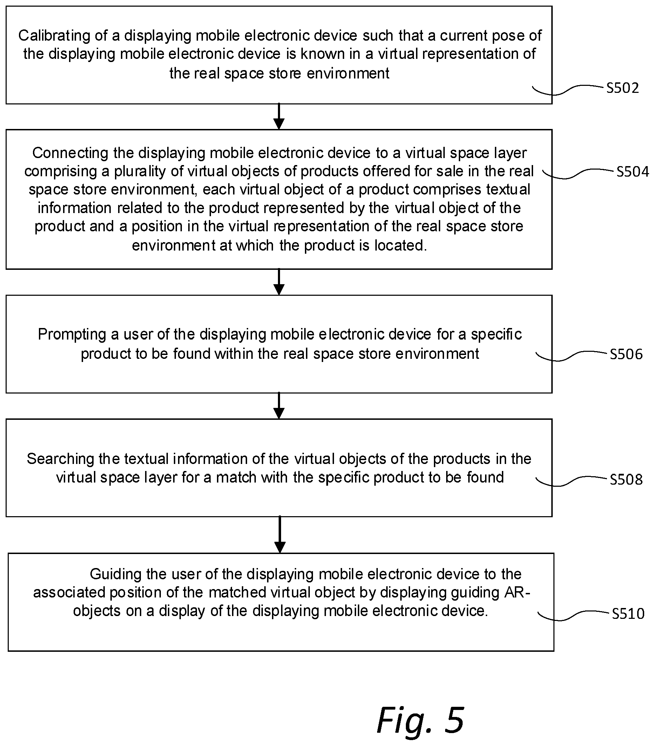

The virtual representation 200 of the real space store environment 100 may be comprised in a virtual space layer 368. The virtual space layer 368 may be hosted at a server 350, e.g. a cloud server, see Fig. 5. The virtual space layer 368 is a place where information about the virtual representation 200 of the real world is stored. The virtual space layer 368 comprises information about the structures 110, 120, 130, 140, 150 being present in the real space store environment 100. Information about the structures 110, 120, 130, 140, 150 in the virtual space layer 368 may be edited. That is, new structures may be added and/or one or more of the structures may be moved. This in order to reflect rearrangements of the structures in the real space store environment. The virtual space layer 368 may further comprise information pertaining to a current pose of the scanning mobile electronic device 300 in the virtual representation 200. The virtual space layer 368 may further comprise information pertaining to one or more historical poses of the scanning mobile electronic device 300, preferably associated with a time instance of the historical pose. The virtual space layer 368 may further comprise information pertaining to virtual objects of products offered for sale in a real space store environment 100 and/or information pertaining to virtual objects of one or more structures 110 for exposing goods in the store environment 100, such virtual objects will be discussed in more detail below. The virtual space layer 368 may represent a partly virtual world, such as an augmented reality, AR, world. The virtual space layer 368 may represent a fully virtual world, such as a virtual reality, VR, world.

The scanning mobile electronic device 300 may be configured to share its current pose with the virtual space layer 368. Hence, the scanning mobile electronic device 300 is configured to communicate with the server 350. This may be achieved by connecting the scanning mobile electronic device 300 to a digital network, such as a mobile network (e.g. 3G, 4G, 5G, or the like) or a WiFi network. The server 350 also being connected to the digital network. Hence, a current pose, i.e. position and orientation, of the scanning electronic device 300 in the virtual representation 200 of the real space may be obtained by accessing the virtual space layer 368 contained in the server 350, the virtual space layer 368 comprising information pertaining to position and orientation of the scanning mobile electronic device 300.

A method 400 for generating virtual objects of products offered for sale in the real space store environment 100 will now be described with reference to Fig. 4. The products typically being exposed on a structure 110 for exposing goods in the store environment 100. All or some of the steps of the method may be computer implemented, i.e. being executed by a processor of an electronic device, e.g. the scanning mobile electronic device 300, the server 350 or any other electronic device. Some steps of the method may be performed at one electronic device and other steps of the method may be performed at another electronic device. All steps of the method may be performed on one and the same electronic device, e.g. the scanning mobile electronic device 300. An example of a real space store environment 100 and a virtual representation 200 of the real space store environment 100 is illustrated and discussed above in connection with Figs 1 and 2. Fig. 4 is a flow chart illustrating the steps of the method 400. Below, the different steps are described in more detail. Even though illustrated in a specific order, the steps of the method 400 may be performed in any suitable order, in parallel, as well as multiple times.

A calibration S402 of the scanning mobile electronic device 300 may be performed such that a current pose of the scanning mobile electronic device 300 is known in the virtual representation 200 of the real space store environment 100. For example, a current pose of the scanning mobile electronic device 300 is updated and known in the virtual space layer 368 being hosted at the server 350.

While the scanning mobile electronic device 300 is moved within the real space, data-encoded markers in the real space store environment are scanned S404, one by one, using the scanner 307 of the scanning mobile electronic device 300. Scanning S404 of a data-encoded marker may be triggered by a user of the scanning mobile device 300. Alternatively, or in combination, data-encoded markers may be scanned automatically upon the scanner 307 recognizes a data-encoded marker.

In connection with each scanning S404 an associated pose of the scanning mobile electronic device 300 within the virtual representation 200 of the real space store environment 100 is determined S406 and at least temporarily saved. The associated pose is determined at a moment of scanning S404 the respective data-encoded marker. Hence, the respective scanning S404 and the associated pose of the scanning mobile electronic device 300 within the virtual representation 200 at the moment of scanning S404 may be associated with each other. For example, a first scanning is performed and an associated first pose of the scanning mobile electronic device 300 within the virtual representation 200 of the real space store environment 100 at a moment of performing the first scanning is determined/saved.

Moreover, in connection with each scanning S404, an associated virtual object of the product associated with the scanned data-encoded marker is generated S408. The associated virtual object of the product comprises textual information related to the product. Such textual information related to the product may be extracted by accessing a database comprising entries of unique identifiers and thereto linked textual information related to a respective product. This since, in connection with each scanning S404, a unique identifier may be extracted S407 from the scanned data-encoded marker. Thereafter, the textual information related to the product may be looked-up S409 in the database by finding the entry in the database corresponding to the unique identifier extracted from the scanned data-encoded marker.

Further, in connection with each scanning S404, an associated position of the associated virtual object within the virtual representation 200 of the real space store environment 100 is determined S410. This by determining an intersection between the structure 110 in the virtual representation 200 of the real space store environment 100 and a raycast from the associated pose of the scanning mobile electronic device 300 in the virtual representation 200 of the real space store environment 100 and in a direction of the scanner 307. Raycasting is a technique used in computer graphics and computer vision to simulate the behavior of rays of light as they interact with objects. Raycasting is commonly employed in rendering, collision detection, and other applications. Imagine you have a viewpoint in a 3D space, and you want to determine what objects are visible from that viewpoint. Raycasting involves casting rays from the viewpoint into the scene to check for intersections with objects. The process starts with defining a ray, which is essentially a straight line with an origin (starting point) and a direction. The origin is in this case the scanner at the moment of performing the scanning. The ray is cast into the scene, and its path is traced until it intersects with a structure in the virtual representation of the real space. When a ray is cast, the raycasting algorithm checks for intersections with structures in the space. In other words, if the pose of the scanning mobile electronic device performing the scanning is known (as in this case), and the intrinsics of the scanning mobile electronic device is known (as in this case), then it is possible to raycast. The raycast is to be performed by shooting a ray from the pose of the scanning mobile electronic device outwards in the direction of the scanner. That ray will then, in the present method, at some point intersect with the structure in the virtual representation of the real space. As such, a measure of where the data-encoded marker is located may be determined. This may then be transferred into an associated position in the virtual representation of a real space store environment at which the data-encoded marker is to be located.

Accordingly, the scanning S404 and the steps performed in connection with each scanning S404 are repeated for a plurality of data-encoded markers. Preferably, the plurality of data-encoded markers are all located at one and the same structure 110 for exposing products offered for sale in the real space store environment. Once the scanning of data-encoded markers of one structure 110 for exposing products offered for sale in the real space store environment 100 is made the plurality of data-encoded markers of another structure 110 for exposing products offered for sale in the real space store environment 100 may be performed.

The method may further comprise displaying S412 one or more of the virtual objects of the products at a display 375 of a displaying mobile electronic device 370. The displaying mobile electronic device 370 may also be part of the system, see Fig. 3. The displaying mobile electronic device 370 will be discussed in more detail below. The displaying S412 one or more of the virtual objects of the products may be made as one or more AR-objects within the virtual representation 200 of the real space store environment 100. Each such one or more AR-object being located at the associated position of the virtual object within the virtual representation 200 of the real space store environment 100. The displaying mobile electronic device 370 is also calibrated in the virtual representation 200 of the real space store environment 100. Hence, a current pose of the displaying mobile electronic device 370 in the virtual representation 200 of the real space store environment 100 is known. In view of the discussion above, it is to be noted that in this context a current pose has the meaning of a current position and orientation within the virtual representation 200 of the real space store environment 100. Again, in view of the discussion above, it is noted that the virtual representation 200 of the real space store environment 100 may be comprised in a virtual space layer 368. Such virtual space layer 368 being hosted as the server 350. The displaying mobile electronic device 370 is configured to share with the virtual space layer 368 information pertaining to its current pose. This by monitoring its movement using one or more built-in sensors such as an accelerometer 371, a gyroscope 372 and/or a magnetometer 373. It is to be noted that in some embodiments the scanning mobile electronic device 300 and the displaying mobile electronic device 370 may be the same mobile electronic device. But in other embodiments, as in the embodiment disclosed in connection with Fig.3 the scanning mobile electronic device 300 and the displaying mobile electronic device 370 may be the different mobile electronic devices.

Hence, one or more of the virtual objects of the products may be displayed S412 at a display 375 of the displaying mobile electronic device 370. Such displaying S412 of the virtual objects of the products may be made as one or more AR-objects positioned within the virtual representation 200 of the real space store environment 100. The one or more AR-objects representing the virtual objects of the products typically being located at the associated positions of the virtual objects within the virtual representation 200 of the real space store environment 100.

The textual information of the virtual object of the products may further be utilized in connection with guiding a user of the displaying mobile electronic device 370 within the real space store environment 100 towards a specific product, e.g. for a customer to find a product to be purchased or for a store clerk being new at his or her job learning to find his or her way in the store. Hence, the user of the displaying mobile electronic device 370 may be a customer seeking a specific product in the real space store environment 100 or a store clerk being new at his or her job learning to find his or her way in the store. A method 500 related to such guiding will now be discussed in connection with Fig. 5. All or some of the steps of the method 500 may be computer implemented, i.e. being executed by a processor of an electronic device, e.g. the displaying mobile electronic device 370, the server 350 or any other electronic device. Some steps of the method 500 may be performed at one electronic device and other steps of the method 500 may be performed at another electronic device. All steps of the method 500 may be performed on one and the same electronic device, e.g. the displaying mobile electronic device 370. An example of a real space store environment 100 and a virtual representation 200 of the real space store environment 100 is illustrated and discussed above in connection with Figs 1 and 2. Fig. 5 is a flow chart illustrating the steps of the method 500. Below, the different steps are described in more detail. Even though illustrated in a specific order, the steps of the method 500 may be performed in any suitable order, in parallel, as well as multiple times.

The displaying mobile electronic device 370 is calibrated S502 such that a current pose of the displaying mobile electronic device 370 is known in the virtual representation 200 of the real space store environment 100. The displaying mobile electronic device being associated with the customer seeking a specific product in the real space store environment 100.

The displaying mobile electronic device 370 is connected S504 to the virtual space layer 368, i.e. to the server 350 comprising the virtual space layer 368. The virtual space layer 368 comprising the plurality of virtual objects of products offered for sale in the real space store environment 100 being generated in accordance with the method discussed above in connection with Fig.4. Hence, each virtual object of a product comprises textual information related to the product represented by the virtual object of the product and a position in the virtual representation 200 of the real space store environment 100 at which the product is located.

Next a user, i.e. the customer or the store clerk, of the displaying mobile electronic device 370 is prompted S506 for a specific product to be found within the real space store environment 100. The prompting S506 may be made by asking the user to input a text string comprising information related to the specific product to be found. Such input may e.g. milk, ketchup, gluten free bread, etc. The text string may be input by a text input unit of the displaying mobile electronic device 370, e.g. a text input unit of a touch sensitive display. Alternatively, or in combination, the text string may be input the user inputting a speech instruction to the displaying mobile electronic device 370, such speech instruction may then be recognized into the text string.

Having received the user input in for of the text string, the textual information of the virtual objects of the products offered for sale in the real space store environment 100 may be searched S508 for a match with the specific product to be found.

Once a match has been found the user of the displaying mobile electronic device 370 may be guided S510 to the associated position of the matched virtual object. Such guiding S510 may be made using AR navigation. That is, AR objects, e.g. in the form of directional arrows, may be displayed on the display of the displaying mobile electronic device. The directional arrows may be updated during movement of the displaying mobile electronic device such that a user is guided to the position of the matched virtual object. Upon arriving at the position of the matched virtual object the matched virtual object may be displayed as an AR-object on the display of the displaying mobile electronic device at a location corresponding to the position of the matched virtual object. Of course, other virtual object may also be displayed at their positions in the virtual representation 200 of the real space store environment 100. The displayed AR-object may comprise textual information related to the product. The displayed AR-object may of course comprise other type of information as well, such as a price of the product.

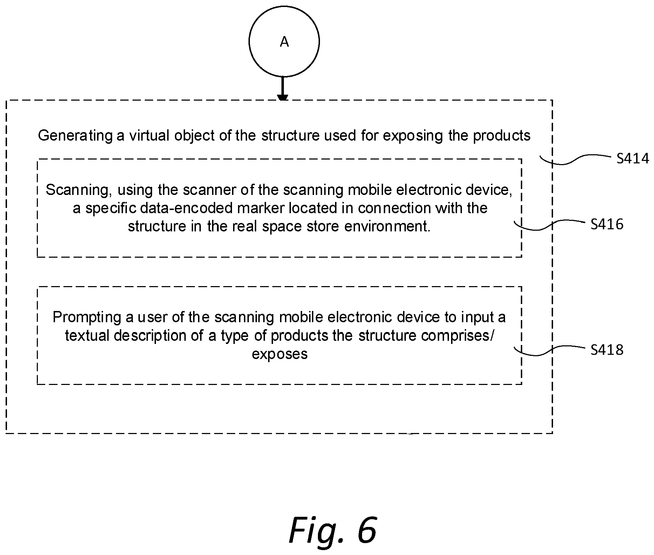

We will now return to the method 400 discussed in connection with Fig. 4. The method 400 may further comprise, see Fig. 6, generating S414 a virtual object of the structure 110 used for exposing the products. The generation of such a virtual object of the structure 110 may comprise scanning S416, using the scanner 307 of the scanning mobile electronic device 300, a data-encoded marker located in connection with the structure 110 in the real space store environment 100. Such a data-encoded marker may be a specific data-encoded marker associated with the whole structure 110. Such a specific data-encoded marker may e.g. be QR-code or barcode. The data-encoded marker may be located on the floor just in front of the structure 110. Alternatively, the data-encoded marker may be located on the structure 110 itself. The generation of such a virtual object of the structure 110 may comprise prompting S418 a user of the scanning mobile electronic device 300 to input a textual description of a type of products the structure 110 comprises/exposes. Some non-limiting examples of such textual descriptions are: dairy products, vegan milk products, soda, coffee beans, pasta, kimchi, etc. The generation of such a virtual object of the structure 110 may be made to comprise the inputted textual description of the structure 110. The virtual object of the structure 110 may then be generated as a planogram intersecting the associated positions of the associated virtual objects of the products being exposed in connection with the structure 110.

The generating of virtual objects of products offered for sale in the real space store environment 100 may be repeated for a plurality of structures 110 within the real space store environment 100. Moreover, the generating of virtual objects of the structures 110 may be repeated for a plurality of structures 110 within the real space store environment 100.

The method 400 may further comprises displaying one or more of the virtual objects of the plurality of structures 110 at the display 375 of the displaying mobile electronic device 370. The displaying may be made as one or more AR-objects within the virtual representation 200 of the real space store environment 100.

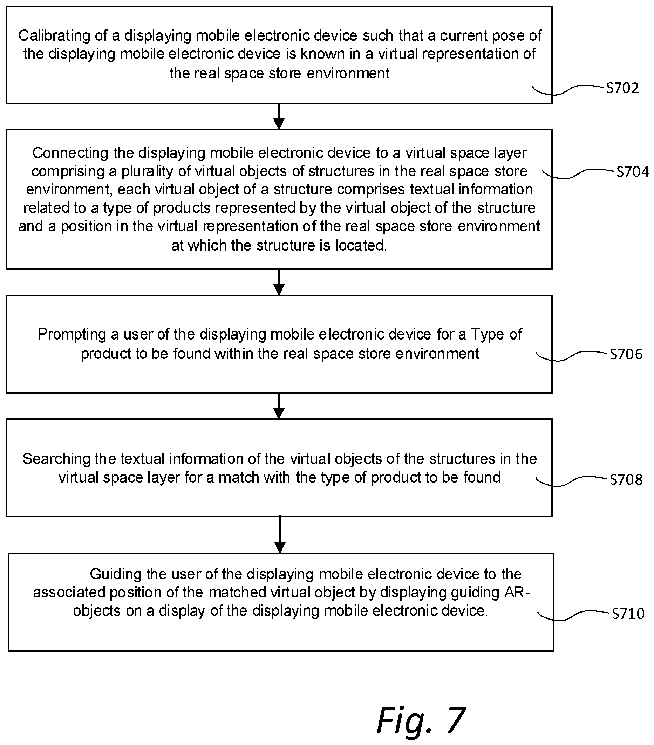

The textual information of the virtual objects of the plurality of structures 110 may further be utilized in connection with guiding a user of the displaying mobile electronic device 370 within the real space store environment 100 towards a specific structure within the store environment 100. The user of the displaying mobile electronic device 370 may e.g. be a customer or a store clerk seeking a type of product within the store environment 100. A method 700 related to such guiding will now be discussed in connection with Fig. 7. All or some of the steps of the method 700 may be computer implemented, i.e. being executed by a processor of an electronic device, e.g. the displaying mobile electronic device 370, the server 350 or any other electronic device. Some steps of the method 700 may be performed at one electronic device and other steps of the method 700 may be performed at another electronic device. All steps of the method 700 may be performed on one and the same electronic device, e.g. the displaying mobile electronic device 370. An example of a real space store environment 100 and a virtual representation 200 of the real space store environment 100 is illustrated and discussed above in connection with Figs 1 and 2. Fig. 7 is a flow chart illustrating the steps of the method 700. Below, the different steps are described in more detail. Even though illustrated in a specific order, the steps of the method 700 may be performed in any suitable order, in parallel, as well as multiple times.

The displaying mobile electronic device 370 is calibrated S702 such that a current pose of the displaying mobile electronic device 370 is known in the virtual representation 200 of the real space store environment 100. The displaying mobile electronic device being associated with the customer seeking a type of product in the real space store environment 100.

The displaying mobile electronic device 370 is connected S704 to the virtual space layer 368, i.e. to the server 350 comprising the virtual space layer 368. The virtual space layer 368 comprising the plurality of virtual objects of structures 110 in the real space store environment 100 being generated in accordance with the method 400 discussed above in connection with Fig. 6. Hence, each virtual object of a structure comprises textual information related to the structure represented by the virtual object of the structure and a position in the virtual representation 200 of the real space store environment 100 at which the structure is located.

Next a user, e.g. the customer or the store clerk, of the displaying mobile electronic device 370 is prompted S706 for a type of product to be found within the real space store environment 100. The prompting S506 may be made by asking the user to input a text string comprising information related to the type of product to be found. Such input may e.g. dairy products, pasta, gluten free products, etc. The text string may be input by a text input unit of the displaying mobile electronic device 370, e.g. a text input unit of a touch sensitive display. Alternatively, or in combination, the text string may be input the user inputting a speech instruction to the displaying mobile electronic device 370, such speech instruction may then be recognized into the text string.

Having received the user input in for of the text string, the textual information of the virtual objects of the structures 110 in the real space store environment 100 may be searched S708 for a match with the type of product to be found.

Once a match has been found the user of the displaying mobile electronic device 370 may be guided S510 to the associated position of the matched virtual object. Such guiding S510 may be made using AR navigation. That is, AR objects, e.g. in the form of directional arrows, may be displayed on the display of the displaying mobile electronic device. The directional arrows may be updated during movement of the displaying mobile electronic device such that a user is guided to the position of the matched virtual object. Upon arriving at the position of the matched virtual object the matched virtual object may be displayed as an AR-object on the display of the displaying mobile electronic device at a location corresponding to the position of the matched virtual object. The displayed AR-object may comprise textual information related to the type of products at the structure 110. The displayed AR-object may of course comprise other type of information as well, such as a price of the product.

The person skilled in the art realizes that the present invention by no means is limited to what is explicitly described above. On the contrary, many modifications and variations are possible within the scope of the appended claims.

For example, the virtual objects of products offered for sale in the real space store environment 100 and/or the virtual objects of the structures 110 within the real space store environment 100 may be displayed on a screen of an electronic device in a virtual reality, VR, world representation of the real space store environment 100. Such an electronic device may be any electronic device adopted to display images and/or video on a screen. Hence, a user viewing the VR, world representation of the real space store environment 100 comprising virtual objects of products offered for sale in the real space store environment 100 and/or the virtual objects of the structures 110 within the real space store environment 100 may get a virtual view of the real space store environment 100.

Additionally, variations can be understood and effected by the skilled person in practicing the claimed invention, from a study of the drawings, the disclosure, and the appended claims.

## Claims

1. A method for generating virtual objects of products offered for sale in a real space store environment (100), the products being exposed on a structure (110) within the real space store environment (100), the method comprising:
scanning (S404), one by one, a plurality of data-encoded markers on the structure (110) in the real space store environment (100), using a scanner (307) of a scanning mobile electronic device (300), the scanning mobile electronic device (300) being calibrated in a virtual representation (200) of the real space store environment (100) such that the scanning mobile electronic device (300) has a known pose in the virtual representation (200) of the real space store environment (100), wherein each of the plurality of data-encoded markers is associated with a product;
in connection with each scanning:
determining (S406), at a moment of scanning, an associated pose of the scanning mobile electronic device (300) in the virtual representation (200) of the real space store environment (100),
generating (S408) an associated virtual object of the product associated with the scanned data-encoded marker, wherein the associated virtual object of the product comprises textual information related to the product, and
determining (S410) an associated position of the associated virtual object within the virtual representation (200) of the real space store environment (100) as an intersection between the structure (110) in the virtual representation (200) of the real space store environment (100) and a raycast from the associated pose of the scanning mobile electronic device (300) in the virtual representation (200) of the real space store environment (100) and in a direction of the scanner (307).

2. The method according to claim 1,
further comprising, in connection with each scanning, extracting (S407) a unique identifier from the data-encoded marker,
wherein generating (S408) an associated virtual object of the product associated with the scanned data-encoded marker comprises extracting the textual information related to the product by, based on the extracted unique identifier from the data-encoded marker, looking-up the textual information related to the product in a database comprising entries of unique identifiers and thereto linked textual information related to a respective product.

3. The method according to claim 1 or 2, further comprising displaying (S412) one or more of the virtual objects of the products at a display (375) of a displaying mobile electronic device (370) as one or more AR-objects within the virtual representation (200) of the real space store environment (100), wherein each such one or more AR-object being located at the associated position of the virtual object, wherein the displaying mobile electronic device being calibrated in the virtual representation (200) of the real space store environment (100) such that the displaying mobile electronic device has a known pose in the virtual representation of the real space.

4. The method according to claim 3, further comprising:
prompting a user of the displaying mobile electronic device (370) for a specific product to be found;
searching the textual information of the virtual objects of the products offered for sale in the real space store environment (100) for a match with the specific product to be found;
guiding the user of the displaying mobile electronic device (370) to the associated position of the matched virtual object.

5. The method according to claim 4, wherein the guiding comprises displaying guiding AR-objects on the display (375) of the displaying mobile electronic device (370).

6. The method according to any one of claims 1-5, further comprising generating a virtual object of the structure (110) by:
scanning, using the scanner (307) of the scanning mobile electronic device (300), a data-encoded marker located in connection with the structure (110) in the real space store environment (100),
prompting a user of the scanning mobile electronic device (300) to input a textual description of a type of products the structure (110) comprises,
generating the virtual object of the structure (110) to comprise the inputted textual description of the structure (110),
wherein the virtual object of the structure (110) is generated as a planogram intersecting the associated positions of the associated virtual objects of the products being exposed on the structure (110).

7. The method according to claim 6, repeating the generating of virtual objects of products offered for sale in the real space store environment (100) for a plurality of structures (110) within the real space store environment (100) and repeating the generating of virtual objects of the plurality of structures (110).

8. The method according to claim 7, further comprising displaying one or more of the virtual objects of the plurality of structures (110) at a display (375) of a displaying mobile electronic device (370) as one or more AR-objects within the virtual representation (200) of the real space store environment (100), wherein the displaying mobile electronic device being calibrated in the virtual representation (200) of the real space store environment (100) such that the displaying mobile electronic device has a known pose in the virtual representation of the real space.

9. The method according to claim 8, further comprising:
prompting a user of the displaying mobile electronic device (370) for a type of product to be found;
searching the textual information of the virtual objects of the structures (110) for a match with the type of product to be found;
guiding the user of the displaying mobile electronic device (370) to the associated position of the matched virtual object.

10. The method according to claim 9, wherein the guiding comprises displaying guiding AR-objects on the display (375) of the displaying mobile electronic device (370).

11. The method according to any one of claims 7-10, further comprising displaying the virtual objects of products offered for sale in the real space store environment (100) and or the virtual objects of the structures (110) of the real space store environment (100) in a virtual reality, VR, representation of the real space store environment (100) on a screen of an electronic device.

12. The method according to any one of claims 1-11, further comprising calibrating (S402) the scanning mobile electronic device (300) such that a current pose of the scanning mobile electronic device (300) is known in the virtual representation (200) of the real space store environment (100).

13. A method of guiding a user in a real space store environment (100) comprising products being exposed on structures (110) within the real space store environment (100), the method comprising:
calibrating (S502) a displaying mobile electronic device (370) associated with the user such that a current pose of the displaying mobile electronic device (370) is known in a virtual representation (200) of the real space store environment (100);
connecting (S504) the displaying mobile electronic device (370) to a virtual space layer (368) comprising a plurality of virtual objects of products offered for sale in the real space store environment (100), wherein each virtual object of a product comprises textual information related to the product represented by the virtual object of the product and a position in the virtual representation (200) of the real space store environment (100) at which the product is located;
prompting (S506) the user of the displaying mobile electronic device (370) for a specific product to be found within the real space store environment (100);
searching (S508) the textual information of the virtual objects of the products in the virtual space layer (368) for a match with the specific product to be found;
guiding (S510) the user of the displaying mobile electronic device (370) to the associated position of the matched virtual object by displaying guiding AR-objects on a display (375) of the displaying mobile electronic device (370).

14. A method of guiding a user in a real space store environment (100) comprising products being exposed on structures (110) within the real space store environment (100), the method comprising:
calibrating a displaying mobile electronic device (370) associated with the user such that a current pose of the displaying mobile electronic device (370) is known in a virtual representation (200) of the real space store environment (100);
connecting the displaying mobile electronic device (370) to a virtual space layer (368) comprising a plurality of virtual objects of structures (110) exposing products offered for sale in the real space store environment (100), wherein each virtual object of a structure comprises textual information related to the structure represented by the virtual object of the structure and a position in the virtual representation (200) of the real space store environment (100) at which the structure is located;
prompting the user of the displaying mobile electronic device (370) for a type of product to be found within the real space store environment (100);
searching the textual information of the virtual objects of the structures in the virtual space layer (368) for a match with the type of product to be found;
guiding the user of the displaying mobile electronic device (370) to the associated position of the matched virtual object of the structure by displaying guiding AR-objects on a display (375) of the displaying mobile electronic device (370).

15. A non-transitory computer-readable storage medium having stored thereon instructions for implementing any one of the methods according to claim 1, 13 or 14, when executed on a device having processing capabilities.
